# EUROPEAN PATENT APPLICATION

(11) **EP 1 016 990 A2**
(43) Date of publication of application: **05.07.2000**
(21) Application number: 99310075.9
(22) Date of filing: 15.12.1999
(51) Int. Cl.: G06F 17/30

(54) **Complex digital content managing method and complex digital content system**

(30) Priority: 28.12.1998 JP 37191998
(71) Applicant: HITACHI, LTD., Chiyoda-ku, Tokyo (JP)
(72) Inventor: Namioka, Miyoko, c/o Hitachi, Ltd., Chiyoda-ku, Tokyo 100-8220 (JP); Koike, Hiroshi, c/o Hitachi, Ltd., Chiyoda-ku, Tokyo 100-8220 (JP); Matsuzawa, Shigeru, c/o Hitachi, Ltd., Chiyoda-ku, Tokyo 100-8220 (JP); Takahashi, Hideo, c/o Hitachi, Ltd., Chiyoda-ku, Tokyo 100-8220 (JP); Katsukura, Keiichi, c/o Hitachi, Ltd., Chiyoda-ku, Tokyo 100-8220 (JP); Hiryama, Kenichi, c/o Hitachi, Ltd., Chiyoda-ku, Tokyo 100-8220 (JP)
(74) Representative: Calderbank, Thomas Roger

(57) **Abstract**

On the registration client side, a complex digital content including bibliography information, sales information, structural information, and delivery data and mapping information are created, the complex digital content and the mapping information are transmitted from the registration client to the database server, the database server storing the bibliography information, the sales information, the structural information, and the delivery data in the complex digital content transmitted into corresponding bibliography information database, sales information database, structural information database, and digital content database on the basis of the mapping information.

## Description

The present invention relates to a complex digital content managing method and a complex digital content system, and particularly, to a technique which is effective when a plurality of complex digital contents including a plurality of kinds of digital contents having an arbitrary construction are managed in a unified manner.

For example, as a database managing method, the procedures described in (a) and (b) below have been known.
(a) Japanese Patent Laid-open No. Hei 8-190542 (Document Database Managing Apparatus and System)
(b) "DataBlade Construction Procedure" by Shigenobu Ito et al. (ISBN4-89369-464-2) (1996.11.25)

The Reference (a) discloses a document database managing method for a plurality of documents different in logical structure in which documents can be stored in a database in accordance with the rules of creating the logical structure of documents.

Further, the Reference (b) discloses that data forms (image, video, etc.) other than characters and numerical values that have been handled by the conventional database managing system are used as various operating functions for the data forms and added. The added one is called XX DataBlade. For example, VIR/VIV DataBlade can retrieve images similar to picture images stored in the database.

However, most of applications for handling data forms other than characters and numerical values (for example, image, video, audio, etc.) are installed on the independent file system, and unification with other data has been difficult.

Accordingly, with the application for carrying out a service making use of data as described, it was necessary to carry out individual data management peculiar to data and individually unify with other databased data associated therewith.

The present invention has been accomplished in order to solve the problems as noted above with respect to prior art. An object of the present invention is to provide a complex digital content managing method and a complex digital content system and to a technique capable of managing in a unified manner a plurality of complex digital contents including a plurality of kinds of digital contents.

Furthermore, another object of the present invention is to provide in a complex digital content managing method and a complex digital content system a technique capable of easily retrieving various information.

The above and other objects and novel features of the present invention will become apparent from the description of the present specification and the accompanying drawings.

Out of the inventions disclosed in the present application, the outline of typical ones will be briefly explained as follows:

According to the present invention, there is provided a complex digital content managing method, in a complex digital content system in which a registration client and a database server are connected to each other through a communication line, for managing in a unified manner a plurality of digital contents including a plurality of kinds of complex digital contents having an arbitrary structure, the method comprising the steps of: on the registration client side, a creating complex digital content including bibliography information, sales information, structural information, and delivery data, and mapping information; and transmitting the complex digital content and the mapping information from the registration client to the database server; the database server storing the bibliography information, the sales information, the structural information, and the delivery data in the complex digital content transmitted into corresponding bibliography information database, sales information database, structural information database, and digital content database on the basis of the mapping information.

Further, according to the present invention, the database server has a bibliography retrieval means, a sales information retrieval means, a structure retrieval means, and a digital content retrieval means corresponding to the databases, and information in the databases is retrieved by the retrieval means.

Further, according to the present invention, the bibliography information includes content identification number, title data, sub-title data, writer data, and copyright data; the sales information includes goods name data, use permission data, price data, and sales promotion data; and the sales information is set every hierarchy of hierarchical digital contents.

In the drawings:
FIG. 1 is a block diagram showing the whole structure of a complex digital content system according to an embodiment of the present invention;
FIG. 2 is a block diagram showing the hard structure of the complex digital content registration client shown in FIG. 1;
FIG. 3 is a block diagram showing the hard structure of the complex digital content database server shown in FIG. 1;
FIG. 4 is a functional block diagram showing the whole structure of the complex digital content system according to the embodiment of the present invention;
FIG. 5 is a conceptual view of assistance in explaining the operating outline of the complex digital content system according to the embodiment of the present invention;
FIG. 6 is a view showing an example of a complex digital content for book according to the embodiment of the present invention;
FIG. 7 is a view showing an example of a complex digital content for music according to the embodiment of the present invention;
FIG. 8 is a view showing a description example of a complex digital content description file for a book prepared by the text file editing section shown in FIG. 2;
FIG. 9 is a view showing a description example of a complex digital content description file for music prepared by the text file editing section shown in FIG. 2;
FIG. 10 is a view showing the description content of the mapping definition file shown in FIG. 2;
FIG. 11 is a flowchart showing the processing procedure at the time of registration of a complex digital content in the database server:
FIG. 12 is a view showing the details of the databases shown in FIG. 3; and
FIG. 13 is a flowchart showing one example of the processing procedure of the sales information retrieval section shown in FIG. 4.

The preferred embodiments of the present invention will now be described in detail with reference to the drawings. In all the drawings for explaining the embodiments, those having the same function will be indicated by the same reference numerals, repeated descriptions of which are omitted.

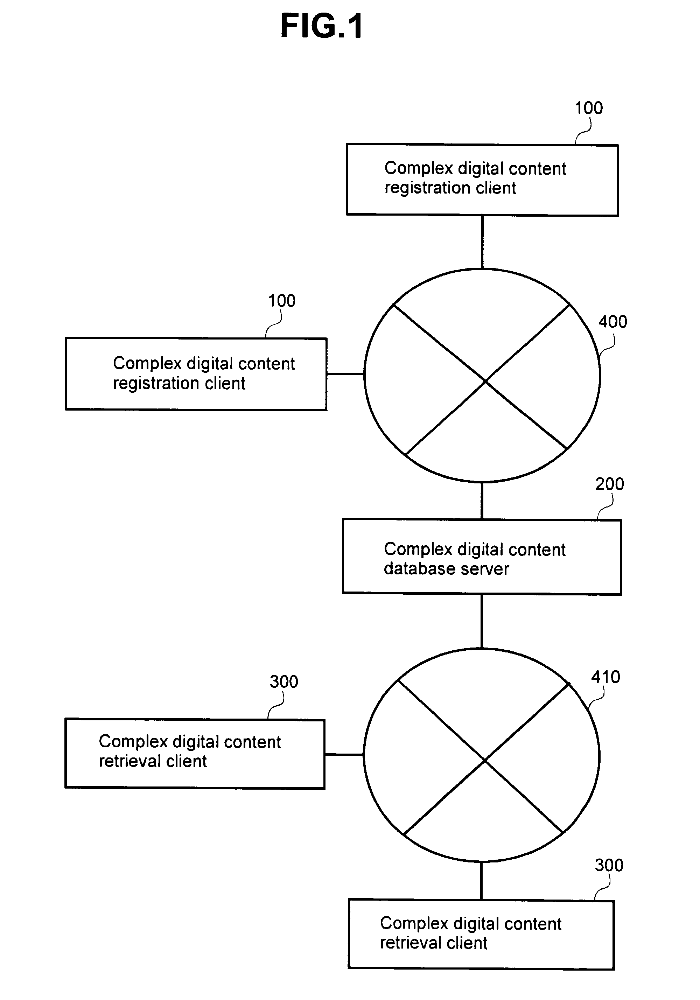

FIG. 1 is a block diagram of the complex digital content system according to an embodiment of the present invention.

As shown in FIG. 1, the complex digital content system according to the present embodiment comprises a complex digital content registration client (hereinafter referred to as a registration client) 100, a complex digital content database server (hereinafter referred to as a database server) 200, a complex digital content retrieval client (hereinafter referred to as a retrieval client) 300, a communication circuit 400 for connecting the registration client 100 to the database server 200, and a communication circuit 410 for connecting the database server 200 to the retrieval client 300.

The registration client 100 and the retrieval client 300 may be of the same client.

That is to say, the same client may be provided with both functions of the registration client 100 and the retrieval client 300.

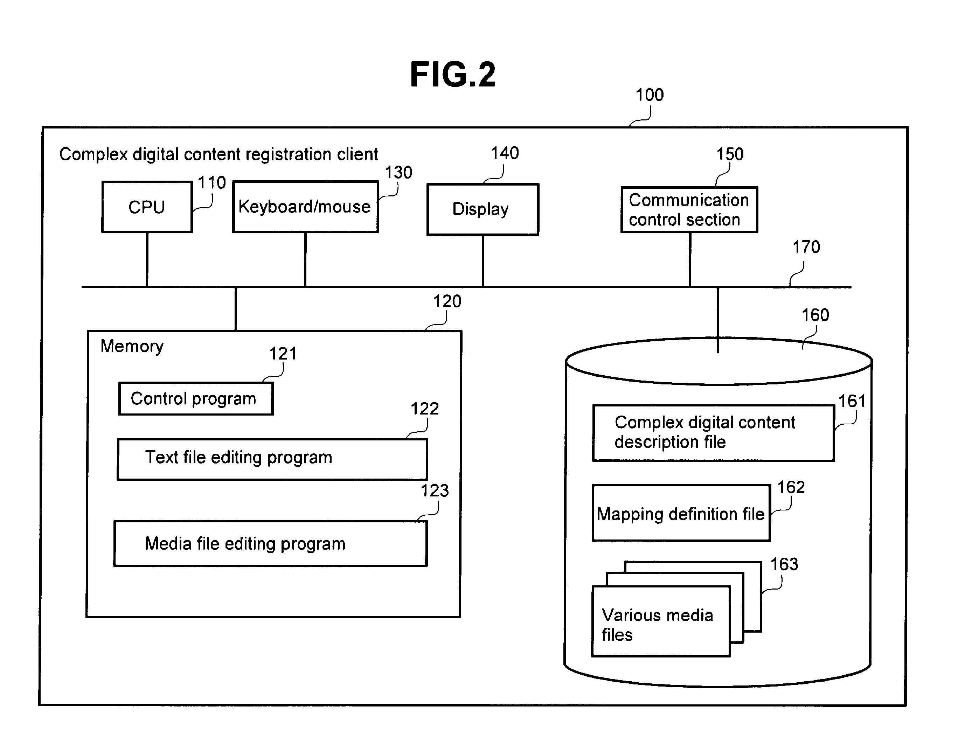

FIG. 2 is a block diagram showing the hard structure of the registration client 100 shown in FIG. 1.

As shown in FIG. 2, the registration client 100 shown in FIG. 1 comprises a CPU 110, a memory 120, an input means 130 such as a keyboard, a mouse and so on, a display 140 such as a CRT, a communication control section 150, an external storage unit 160, and a bus line 170 for connecting these.

The memory 120 encases therein a control program 121, a text file editing program 122, and a media file editing program 123.

The control program 121 performs the whole control of the registration client 100.

The external storage unit 160 encases therein a complex digital content description file 161, a mapping definition file 162, and a various media file 163.

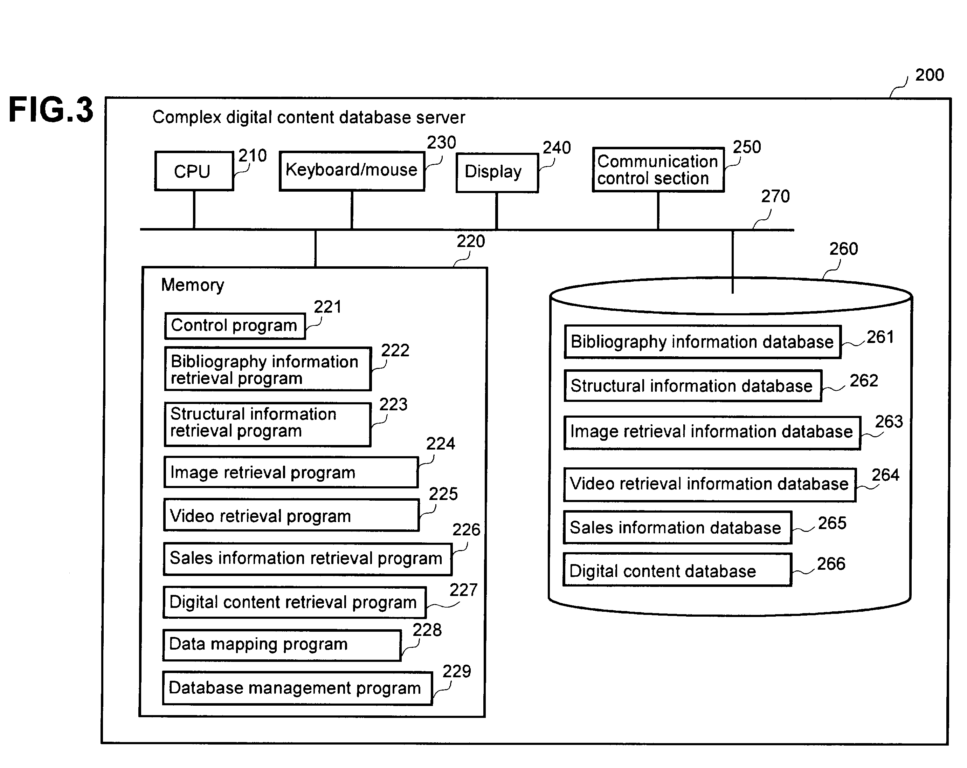

FIG. 3 is a block diagram showing the hard structure of the database server 200 shown in FIG. 1.

As shown in FIG. 3, the database server 200, shown in FIG. 1 comprises a CPU 210, a memory 220, an input means 230 such as a keyboard, a mouse and so on, a display 240 such as a CRT, a communication control section 250, an external storage unit 260, and a bus line 270 for connecting these.

The memory 220 encases therein a control program 221, a bibliography information retrieval program 222, a structural information retrieval program 223, an image (still picture) retrieval program 224, a video (moving picture) retrieval program 225, a sales information retrieval program 226, a digital content retrieval program 227, a data mapping program 228, and a database management program 229.

The control program 221 performs the whole control of the database server 200.

The external storage unit 260 is provided with a bibliography information database (or a bibliography information table) 261 for storing bibliography information, a structural information database (or a structural information table) 262 for storing structural information, an image retrieval information database (or an image retrieval information table) 263 for storing image retrieval information, a video retrieval information database (or a video retrieval information table) 264 for storing video retrieval information, a sales information database (or a sales information table) 265 for storing sales information, and a digital content database 266 for storing data of the complex digital content.

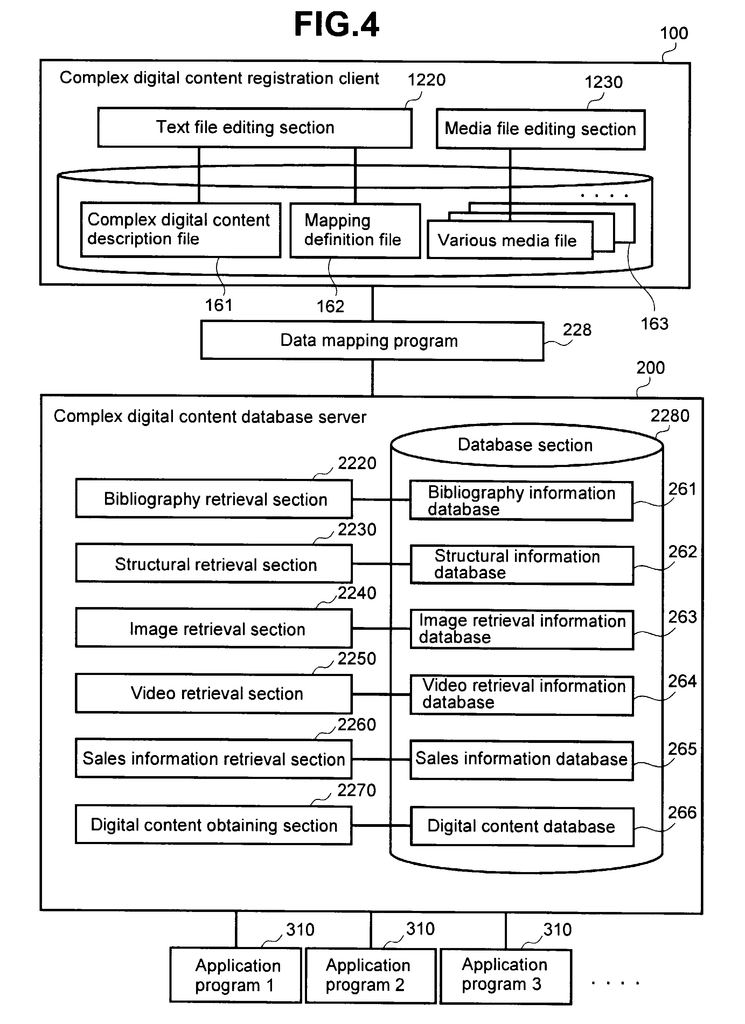

FIG. 4 is a function block diagram of the whole complex digital content system according to the present embodiment.

In FIG. 4, a text file editing section 1220 and a media file editing section 1230 are functional means realized as the result that the CPU 110 executes the text file editing program 122.

Similarly, a bibliography retrieval section 2220, a structural retrieval section 2230, an image retrieval section 2240, a video retrieval section 2250, a sales information retrieval section 2260, a digital content obtaining section 2270, and a database section 2280 are functional means realized as the result that the CPU 210 executes the bibliography information retrieval program 222, the structural information retrieval program 223, the image retrieval program 224, the video retrieval program 225, the sales information retrieval program 226, the digital content retrieval program 227, and the database management program 229.

An application program 310 is a program within the retrieval client 300.

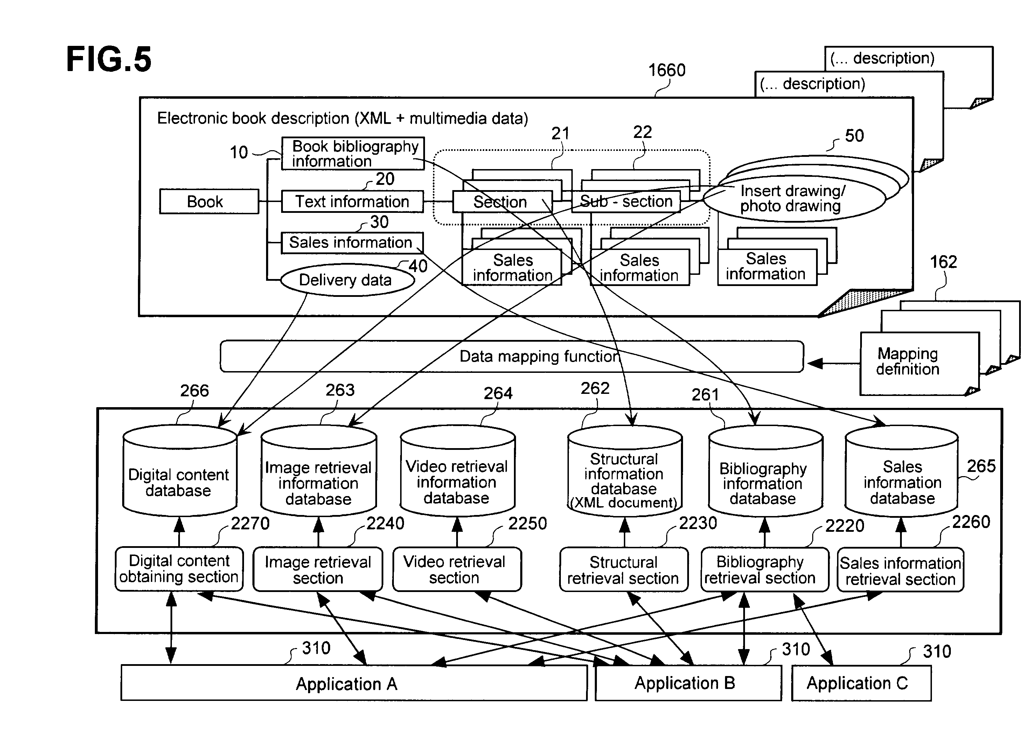

FIG. 5 is a conceptual view of assistance in explaining the operation outline of the complex digital content system according to the embodiment of the present invention.

In FIG. 5, reference numeral 1660 denotes a complex digital content (a complex digital content for a book in this example) prepared by the text file editing section 1220 and the media file editing section 1230.

It should be noted that the complex digital content 1660 means the content in which a text, an image, a video, an audio and other various data are unified.

The complex digital content 1660 is composed, for example, in case of a book, of book bibliography information 10, structural information 20, sales information 30, delivery data 40, and inserted drawing/photo 50.

The structural information 20 includes sections 21 and sub-sections 22, and the sales information 30 includes use permission data, price data of books, etc.

In this case, as shown in FIG. 5, the sales information 30 is set every hierarchy including a unit of section, sub-section, or insert drawing/photo drawing (for example, such as the price in the case where only part of sections is printed) of the digital content.

Further, as shown in FIG. 5, according to the content of definition described in the mapping definition file 162, the book bibliography information 10, the structural information (section 21, sub-section 22), the sales information, and delivery data 40 and the inserted drawing/photo 50 are stored in the bibliography information database 261, the structural information database 262, the sales information database 265, and the digital content database 266, respectively, within the database server 200.

Further, in the database section 2280, retrieval information of the inserted drawing/photo 50 is formed, and stored in the image retrieval information database 263.

Similarly, in the case where the complex digital content includes a video, in the database section 2280, retrieval information of the video is formed, and stored in the video retrieval information database 264.

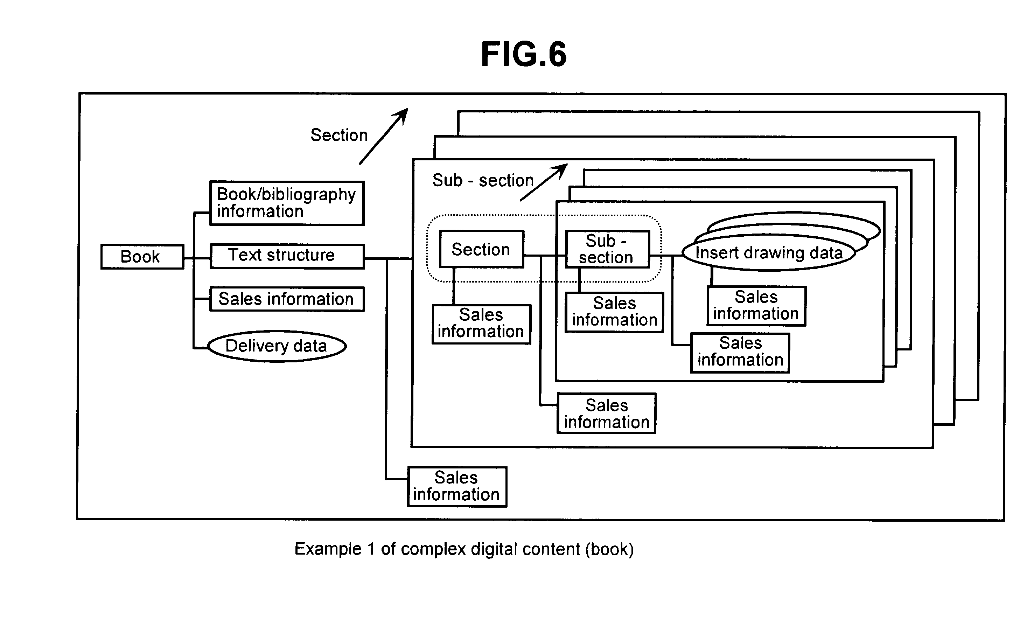

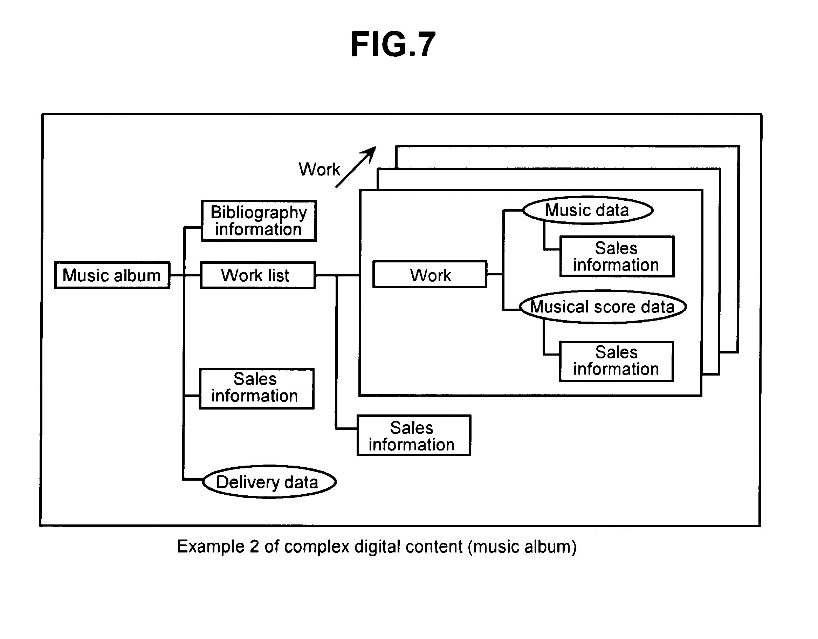

FIGS. 6 and 7 show one example of the complex digital content 1660, FIG. 6 being the complex digital content of a book, and FIG. 7 being the complex digital content of music.

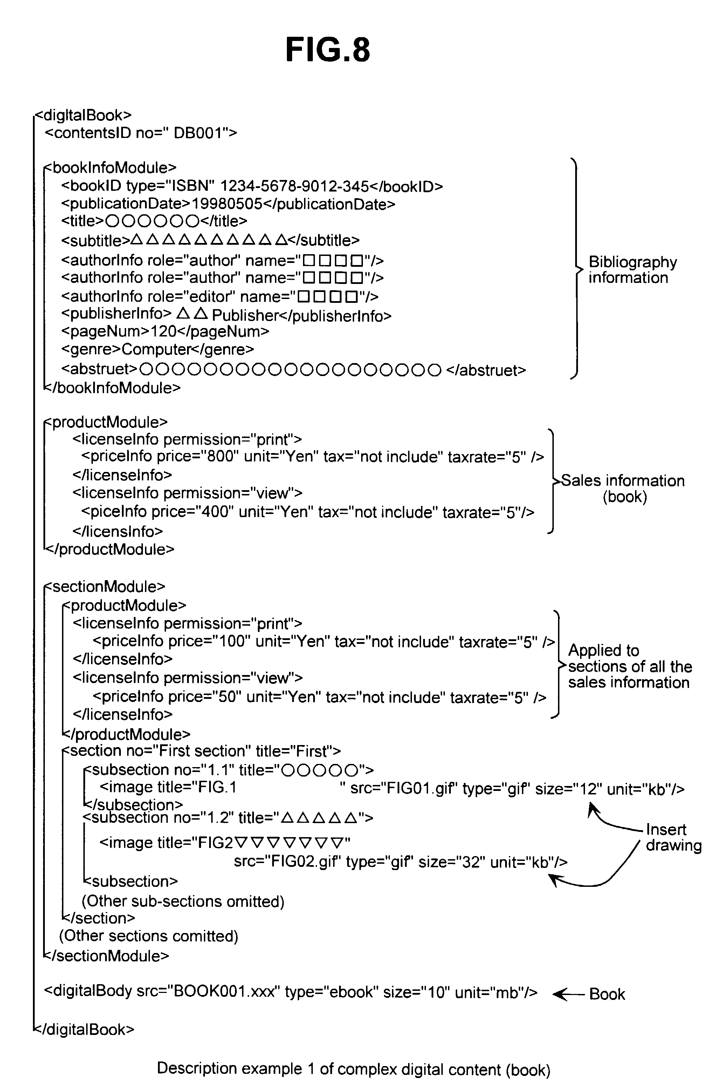

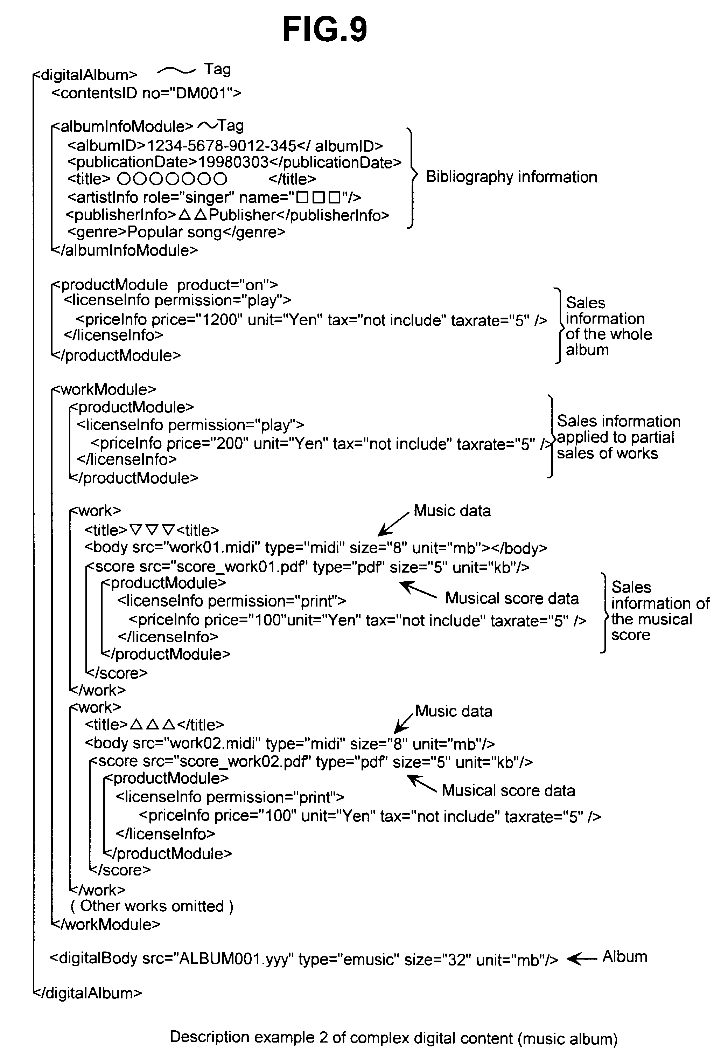

FIGS. 8 and 9 show a description example of the complex digital content description file prepared by the text file editing section 1220.

FIG. 8 is a description example of a book, and FIG. 9 is a description example of music.

Those in FIGS. 8 and 9 are described in XML (eXtended Markup Language), and meaning (content) of the description is also shown therein.

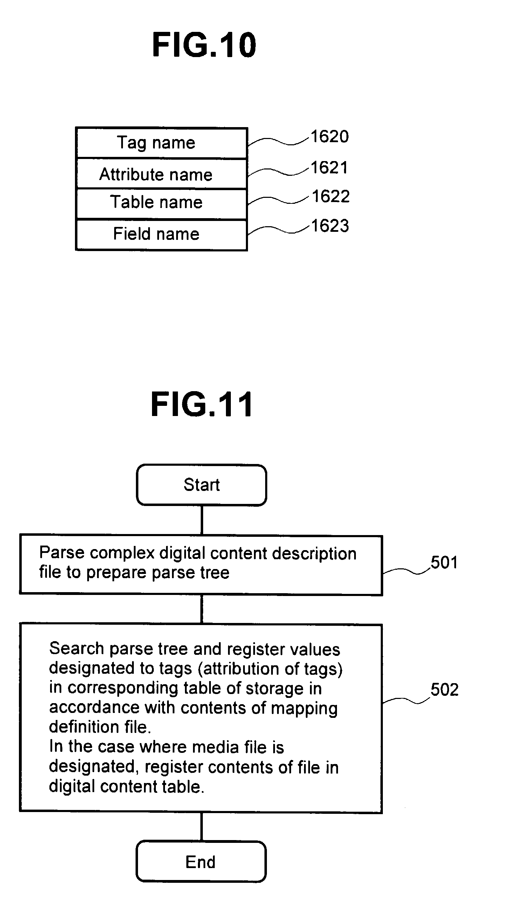

FIG. 10 shows the description content of the mapping definition file 162 shown in FIG. 2.

As shown in FIG. 10, the description content of the mapping definition file 162 is composed of a tag name 1620 and an attribute name 1621, a database name (or a table name) 1622 for storing the tag name 1620 and the attribute name 1621, and a field name 1623.

The contents of the complex digital content description file 161, the mapping definition file 162 and various media file 163 in the registration client 100 are transmitted to the database server 200, and are stored in the respective databases in the procedure mentioned previously.

FIG. 11 is a flowchart showing the processing procedure at the time of registration of a complex digital content in the database server 200.

The processing procedure at the time of registration of a complex digital content in the database server 200 will be described below.

First, the complex digital content description file 161 is parsed to prepare parse tree (Step 501).

Next, the parse tree is searched, whereby values designated to the tags (the attribution of tags) are registered in the database (table) corresponding to the external storage unit 260 in accordance with the content of the mapping definition file 162 (Step 502).

In Step 502, in the case where the media file is designated, the content of the file is registered in the digital content database 266.

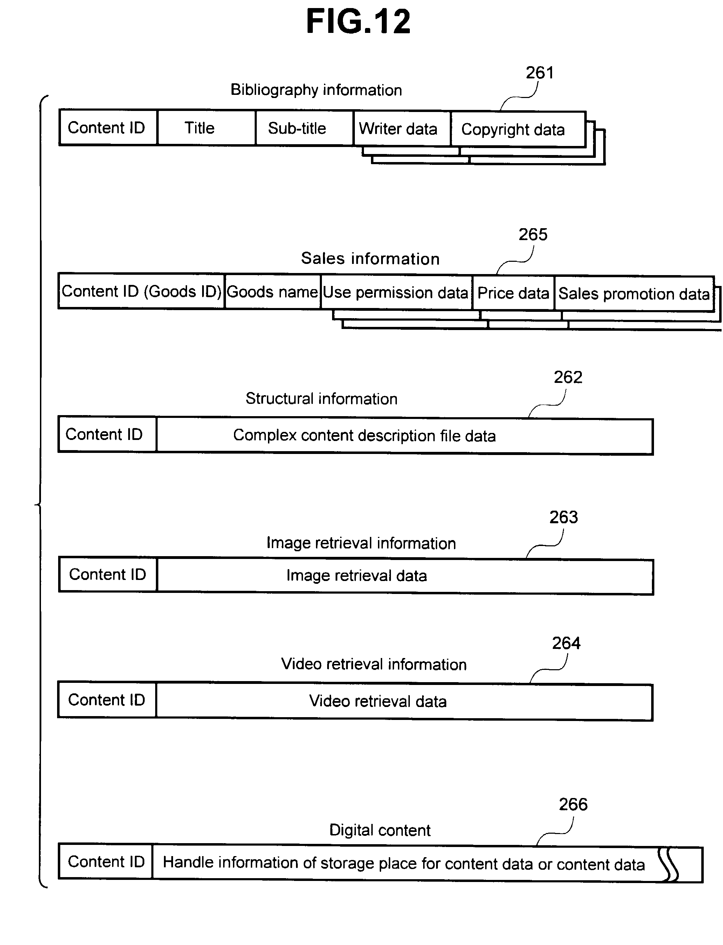

FIG. 12 shows the details of the databases shown in FIG. 3.

As shown in FIG. 12, in the bibliography information database 261 are stored a title, a sub-title, writer data, and copyright data every content ID.

Further, in the sales information database 265 are stored the goods name, use permission data, price data, and sales promotion data every content ID.

Further, in the structural information database 262 are stored data within the complex content description file.

Further, in the image retrieval information database 263 and the video retrieval information database 264 are stored image retrieval data and video retrieval data, respectively.

Furthermore, in the digital content database 266 are stored handle information at a storing place of the content data or the content data.

As described above, in the present embodiment, retrieval sections corresponding to the respective databases are provided in the database server 200.

For example, as shown in FIG. 5, the respective retrieval sections retrieve the databases, in accordance with the instructions from an application program of the retrieval client 300, and return the results therefrom to the application program.

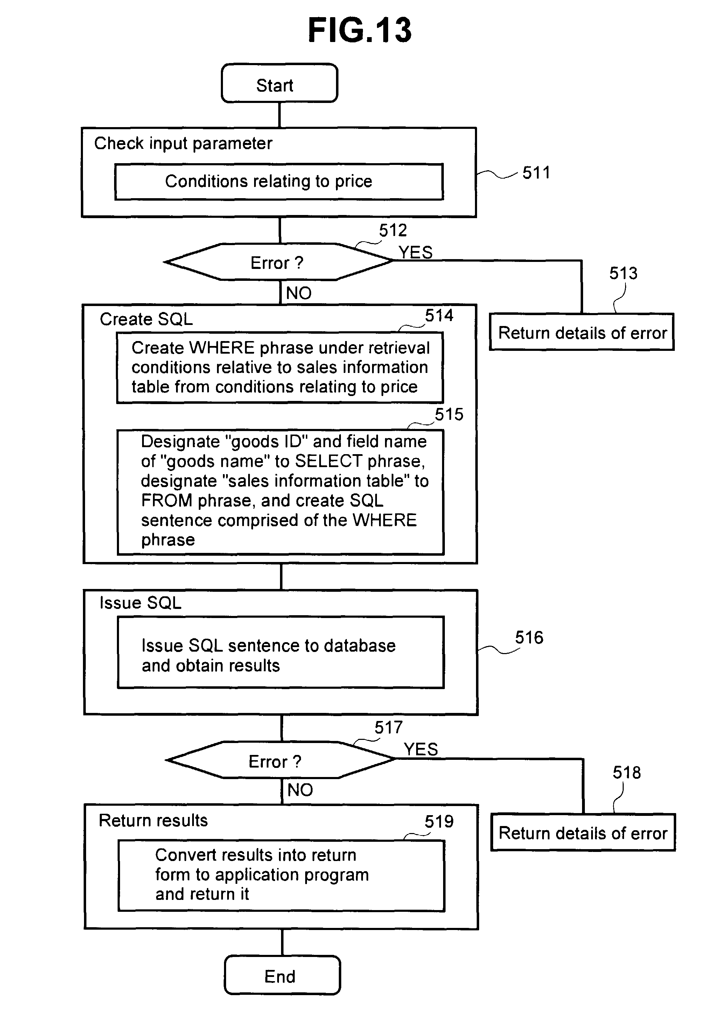

FIG. 13 is a flowchart showing one example of the processing procedure of the sales information retrieval section 2260 shown in FIG. 4.

The processing procedure of the sales information retrieval section 2260 will be described hereinafter with reference to FIG. 13.

The flowchart shown in FIG. 13 is a flowchart for returning the goods ID of the goods satisfied with the conditions relating to the prices and a list of the goods names.

First, an input parameter of conditions relating to the prices is verified (Step 511).

Then, whether or not there is any error found in the input parameter check in Step 511 is decided (Step 512). If an error occurs in Step 512, the details thereof are returned (Step 513).

If no error occurs in Step 512, there is created the WHERE phrase of the retrieval conditions relative to the sales information database 265 from the conditions relating to the prices (Step 514).

Next, "the goods ID" and the field name of "the goods name" are designated to the SELECT phrase, "the sales information database" is designated to the FROM phrase, and the SQL sentence comprised of the WHERE phrase is created (Step 515).

Then, the SQL sentence is issued to the database to obtain the result (Step 516).

Next, whether or not there is any error found from the issuance of the SQL sentence is decided in Step 516 (Step 517). If an error occurs in Step 517, the result thereof is returned (Step 518).

If no error occurs in Step 517, the retrieval result is converted into the return form to the application program to return it to the application program (Step 519).

It is noted that the above-described retrieval example is an example. In the present embodiment, the following retrievals can be executed.
(1) Retrieval example of the sales information retrieval section 2260
   . With respect to the content of the content ID designated, all the sales information are returned.
   . The content ID of the goods satisfied with the conditions of the prices and a list of the goods name are returned.
   . A list of the content IDs of the goods satisfied with the conditions of the goods name is returned.
(2) Retrieval example of the bibliography retrieval section 2220
   . With respect to the content of the content ID designated, all the bibliography information are returned.
   . With respect to the content satisfied with the conditions relating to a writer, a list of values of the designated items is returned (for example, "title" and "sub-title").
   . A list of the content IDs satisfied with the conditions of the title is returned.
(3) Retrieval example of the structural retrieval section 2230
   . With respect to the content of the content ID designated, all the structural information are returned.
   . A list of content IDs having the designated value (for example, "a beef curry") to the designated tag is returned (for example, title attribution of <section> tag).
(4) Retrieval example of the image retrieval section 2240
   . A list of content IDs arranged in order of high similarity with respect to the image provided under the conditions is returned.
(5) Retrieval example of the video retrieval section 2250
   . A list of content IDs having a scene similar to the scene provided under the conditions is returned.
(6) Retrieval example in the digital content obtaining section
   . The content designated by the content ID to the designated file is copied and returned.

As described above, according to the present embodiment, bibliography information, sales information, structural information and book (music) delivery data of a plurality of complex digital contents including a plurality of kinds of complex digital contents can be managed in a unified manner, thus facilitating the management.

Further, since the retrieval can be carried out every bibliography information, sales information, structural information and book (music) delivery data, the retrieval is facilitated, and the preparation of application programs for retrieval is facilitated.

While the invention accomplished by the present inventor has been described in detail in accordance with the embodiment, it is to be noted of course that the present invention is not limited to the aforementioned embodiment but can be variously changed in the scope not departing the gist thereof.

The effects obtained from typical ones out of the inventions disclosed in the present application will be briefly mentioned as follows:
(1) According to the present embodiment, since bibliography information, sales information, structural information and book (music) delivery data of a plurality of complex digital contents including a plurality of kinds of complex digital contents can be managed in a unified manner, the management is facilitated.
(2) According to the present invention, since the retrieval can be carried out every bibliography information, sales information, structural information and book (music) delivery data, the retrieval is facilitated, and the preparation of application programs for retrieval is facilitated.

## Claims

1. A complex digital content managing method, in a complex digital content system in which a registration client and a database server are connected to each other through a communication line, for managing in a unified manner a plurality of digital contents including a plurality of kinds of complex digital contents having an arbitrary structure,
said method comprising the steps of:
on said registration client side, creating a complex digital content including bibliography information, sales information, structural information, and delivery data, and mapping information; and
transmitting said complex digital content and said mapping information from said registration client to said database server;
wherein said database server stores the bibliography information, the sales information, the structural information, and the delivery data in the complex digital content transmitted into corresponding bibliography information database, sales information database, structural information database, and digital content database on the basis of said mapping information.

2. A complex digital content managing method according to claim 1, wherein said database server has a bibliography retrieval means, a sales information retrieval means, a structure retrieval means, and a digital content retrieval means corresponding to said databases, and information in said databases is retrieved by said retrieval means.

3. A complex digital content managing method according to claim 1, wherein said bibliography information includes content identification number, title data, sub-title data, writer data, and copyright data; said sales information includes goods name data, use permission data, price data, and sales promotion data; and said sales information is set every hierarchy of hierarchical digital contents.

4. A complex digital content managing method according to claim 2, wherein said bibliography information includes a content identification number, title data, sub-title data, writer data, and copyright data; said sales information includes goods name data, use permission data, price data, and sales promotion data; and said sales information is set every hierarchy of hierarchical digital contents.

5. A complex digital content system in which a registration client and a database server are connected to each other through a communication line,
said registration client comprising:
a complex digital content creating means for creating a complex digital content including bibliography information, sales information, structural information and delivery data;
a mapping information creating means for creating mapping information;
a transmission means for transmitting the complex digital content created by said complex digital content creating means, and the mapping information created by said mapping information creating means to the database server; and
said database server comprising:
a receiving means for receiving the complex digital content transmitted from said registration client and the mapping information,
a bibliography information database for storing the bibliography information of the complex digital content,
a sales information database for storing the sales information of the complex digital content,
a structural information database for storing the structural information of the complex digital content,
a digital content database for storing data of the complex digital content,
a mapping means for storing the bibliography information, the sales information, the structural information and the delivery data in the complex digital content received by said receiving means into the corresponding databases on the basis of the mapping information received by said receiving means,
a bibliography retrieval means for retrieving the bibliography information in said bibliography information database,
a sales information retrieval means for retrieving the sales information in said sales information database,
a structure retrieval means for retrieving the structural information in said structural information database, and
a digital content retrieval means for retrieving the data of the complex digital content in said digital content database.

6. A complex digital content managing program product comprising:
a function for inputting mapping information for storing data into a corresponding database; and
a function for storing bibliography information, sales information, structural information and delivery data in a complex digital content received by a database server into corresponding bibliography information database, sales information database, structural information database, and digital content database on the basis of said mapping information.
